# EUROPEAN PATENT APPLICATION

(11) **EP 4 621 018 A1**
(43) Date of publication of application: **24.09.2025**
(21) Application number: 23818564.9
(22) Date of filing: 13.11.2023
(51) Int. Cl.: C09D 5/22, G09F 13/20, G09F 13/22

(54) **BACKLIT PHOTOLUMINESCENT DEVICE FOR SAFETY SIGNAGE AND METHOD FOR PRODUCING SAME**

(30) Priority: 15.11.2022 PT 2022118346
(71) Applicant: ERTECNA - EMPRESA DE REVESTIMENTOS TÉCNICOS, LDA, 3080-436 FIGUEIRA DA FOZ (PT)
(72) Inventor: DE CARVALHO REI, José Manuel Tavares, 4415-030 PEROSINHO VILA NOVA DE GAIA (PT)
(74) Representative: RCF - Protecting Innovation, S.A.
(86) International application number: PCT/PT2023/050042
(87) International publication number: WO 2024/107074

(57) **Abstract**

The present invention relates to a photoluminescent device for safety signalling and to the production process thereof. The photoluminescent device comprises an OLED panel (2) and a photoluminescent film (3) arranged thereon, wherein the film (3) comprises at least one safety pictogram (4) which consists of a photoluminescent mixture comprising a photoluminescent pigment and a binder, in the proportions of 65% to 75% by weight of photoluminescent pigment to 25% to 35% by weight of binder. The invention lies in the field of safety signalling devices.

## Description

### FIELD OF THE INVENTION

The present invention relates to a backlit photoluminescent device and to the production process thereof. The invention is in the field of safety signalling devices, in particular backlit photoluminescent signalling devices.

### BACKGROUND OF THE INVENTION

The existence of safety signs is very important to help resolve serious consequences in emergency situations, such as the formation of smokes, fires, earthquakes, tsunamis, landslides and labour accidents or others. Such signs may indicate evacuation routes, emergency exits or the location of firefighting and alarm equipment or medical and aid equipment, such as defibrillators and the like, as well as the best procedures for the general population.

More specifically, safety signalling includes the following categories:
- Evacuation Signs - it is the category for signs that indicate an evacuation path, the location of safety equipment or a safety installation, or a safety action (signs with safety conditions);
- Signs of fire-fighting and alarm equipment - it is the category for signs that identify fire-fighting and alarm equipment;
- Mandatory signs - signs that define mandatory actions, which are necessary for the safety of property and occupants;
- Prohibition signs - signs that indicate prohibited actions that may jeopardize the safety of property and occupants
- Danger signs - signs that aim to inform occupants of dangers and risks present in locations.

Also associated with the field of safety, there is the concept of safety lighting, which serves a different purpose compared to safety signalling. Safety lighting covers emergency lighting and anti-panic lighting, the purpose of which is to replace natural or artificial lighting and illuminate workplaces and escape routes and also places with alarm and firefighting equipment, architectural barriers/obstacles, among others.

In terms of safety signs, the market has used photoluminescent signs and luminaires.

One of the conventionally adopted solutions combines luminaires and informative signs, in particular safety signs. Usually, the safety sign is installed below the luminaire. This solution often causes human eyesight to become blurred, obscuring the existing sign regardless of its installation position in relation to the luminaire.

In another type of solution, the safety sign, made of vinyl or other polymer material, is placed directly on the transparent front part of the luminaire, thus providing a backlit sign. However, it was found that this solution deteriorates and/or distorts the sign's message or does not provide the best conditions for viewing the message, producing shadow areas, repeated discontinuities in the pictograms, etc. Additionally, it significantly reduces the intensity and quality of lighting useful to the space and user, often falling short of what is required by standards and legislation. These disturbances create even greater difficulty in perceiving the safety message and thus a less rapid reaction from users, resulting in a high level of inconvenience in emergency situations, in which human judgment is often affected.

The technique sought to evolve in an attempt to improve the visibility of the safety sign message by incorporating a photoluminescent sign into the luminaire. In this case, the aim was to solve the problem of lack of visibility of signals caused by possible power failures that result in the unforeseen shutdown of the luminaire, due to breakdown or insufficient maintenance. In this solution, the photoluminescent property of the sign ensures the visibility thereof in conditions where there is no external light source.

In fact, photoluminescent signs have the characteristic of presenting a residual luminosity in the absence of a surrounding natural or artificial light source. To this end, photoluminescent signs have integrated photoluminescent pigments, such pigments being mineral materials that are available in nature, which have the property of being excited by surrounding light, natural or artificial, in such a way that they provide remaining luminosity upon cessation of said surrounding light. In other words, in the absence of light, they release accumulated energy. In practical terms, a photoluminescent sign displays light information in a location free from any active light source, for a certain period of time, as long as it has previously been excited by a surrounding light source.

These artificially illuminated photoluminescent signs are mostly designed with an LED light source, which indirectly falls on the sign. Indirect lighting, that is, which is provided by the light source with angles of incidence not perpendicular to the main faces of the sign and with the light source far from the sign, does not allow uniform stimulation of the photoluminescent material and, therefore, in situations of absence of any light source, the pictogram/message is displayed in a non-uniform way, compromising the user's perception, which can cause delays in responding to the necessary action in the event of an emergency. On the other hand, this artificial light (LED) lighting depends on the building's power grid, therefore it does not ensure continued charging of the photoluminescent sign in the event of a power failure.

This problem is especially adverse when the space where lies the photoluminescent sign does not have natural (sun) light or other type of surrounding artificial light, such as for example interior corridors, interior stairs, technical areas or others quite common in buildings, such as hotels or offices.

In many cases, it is the photoluminescent layer itself that constitutes a physical barrier to the emergency lighting function, limiting the device's performance with regard to this function, when there is an absence of light.

Charging the photoluminescent sign can be carried out by external lighting or internal LED auxiliary lighting. However, it has been found that this combination of artificial LED lighting with photoluminescent signs does not provide luminance values suitable for market needs.

Among other reasons, the configuration of LED luminaires itself, as well as the respective way of light diffusion and the design and method of application of photoluminescent signs, do not support a clear and homogeneous transmission of the safety message.

The Chinese utility Model CN209418089(U), titled "Energy-saving indication board", discloses a signalling device provided with a LED and a light-reflecting element. The body of the signalling device comprises a solar panel, a charge and discharge controller, a battery and a lighting sensor arranged on the outside of the body of the signalling device. The controller is connected to the solar panel, to the battery and to the lighting sensor. A reflector plate is arranged on the outer side surface of the reflector element; wherein the reflector plate has a laminar structure and comprises a transparent reflector layer with a polygonal surface, a layer of photoluminescent material and a rigid bottom layer. A transformer is connected to the power grid and to the charge and discharge controller. The LED has a simple structure, safe and capable of saving energy, although it is susceptible to acting in conditions of strong light irradiation.

PCT application published under number WO2020013713 (A1) and entitled "Hybrid Led/Photoluminescent Signs", discloses photoluminescent signals, in particular signals in which one or more light-emitting diodes (LED) emit light that excites one or more photoluminescent elements. In one aspect, the invention also provides for circuitry arranged for connecting to an AC power source and supplying power to the LED.

There is therefore the need in the art to develop a photoluminescent device that can transmit a clear and unambiguous message, which overcomes the limitations of existing devices regarding the transmission quality the safety message to users, thus allowing for improved conditions for reproducing safety messages to the field of photoluminescent safety signalling.

### SUMMARY OF THE INVENTION

The present invention relates to a photoluminescent device (1) for safety signalling, characterized in that it comprises an OLED panel (2) and a photoluminescent film (3) arranged on said OLED panel (2), wherein the photoluminescent film (3) comprises a transparent support film and at least one photoluminescent safety pictogram (4) printed on the transparent support film, wherein the safety pictogram (4) consists of a photoluminescent mixture comprising a photoluminescent pigment and a binder, in the proportions of 65% to 75% by weight of photoluminescent pigment to 25% to 35% by weight of binder.

Preferably, said photoluminescent mixture comprises 67% to 70% by weight of pigment to 30% to 33% by weight of binder. Most preferably, said photoluminescent mixture comprises 70% by weight of pigment to 30% by weight of binder.

In an embodiment of the photoluminescent device (1), said binder comprises a dilution agent, an additive and a varnish in proportions of 11% to 12% by weight of dilution agent, 6% to 12% by weight of additive and 77% to 82% by weight of varnish. Preferably, the binder comprises a proportion of 11% to 12% by weight of dilution agent, 6% to 9% by weight of additive and 80% to 82% by weight of varnish. Most preferably, the binder comprises a proportion of 11% to 11.5% by weight of dilution agent, 8.5% to 11% by weight of additive and 78% to 80% by weight of varnish.

Preferably, the photoluminescent pigment is selected from the group of Alkaline Earth Aluminates of the MAl₂O₄:Eu,RE type, where M = Ca, Sr, Ba and RE = Nd, Dy.

Most preferably, the photoluminescent pigment is Strontium Aluminate doped with Europium and Dysprosium (SrAl₂O₄:Eu²⁺,Dy³⁺).

In a preferred embodiment of the photoluminescent device (1), said support film is made of a polymeric material, most preferably polycarbonate.

The present invention also relates to a photoluminescent device production process. The production process comprises the steps of:
a) preparing a photoluminescent mixture comprising a photoluminescent pigment and a binder, in the proportions of 65% to 75% by weight of photoluminescent pigment to 25% to 35% by weight of binder;
b) printing on a polymeric support film at least one safety pictogram with the photoluminescent mixture from step a); and
c) arrange the photoluminescent film obtained in step b) on an OLED panel.

In a preferred embodiment of the production process of a photoluminescent device according to the invention, in step a) of preparing a photoluminescent mixture, the binder of said mixture comprises a dilution agent, an additive and a varnish, in a proportion of 11 % to 12% by weight of dilution agent, 6% to 12% by weight of additive and 77% to 82% by weight of varnish; more preferably, in a proportion of 11% to 12% by weight of dilution agent, 6% to 9% by weight of additive and 80% to 82% by weight of varnish; most preferably in a proportion of 11% to 11.5% by weight of dilution agent, 8.5% to 11% by weight of additive and 78% to 80% by weight of varnish.

Equally preferably, in step a) of preparing the photoluminescent mixture, the photoluminescent pigment is selected from the group of Alkaline Earth Aluminates of the type MAl₂O₄: Eu,RE: Eu, RE, where M = Ca, Sr, Ba and RE = Nd, Dy. Most preferably, the photoluminescent pigment is Strontium Aluminate doped with Europium and Dysprosium (SrAl₂O₄:Eu²⁺,Dy³⁺).

The invention also relates to the use of the photoluminescent device (1) to be applied simultaneously to safety signalling and safety lighting.

### BRIEF DESCRIPTION OF THE DRAWINGS

Below is a detailed description of the invention with reference to the attached drawings, wherein:
Fig. 1 illustrates an exploded view of a photoluminescent device (1) according to the invention, in which the essential components of the device are represented: an OLED panel (2) and a photoluminescent film (3) with a safety pictogram (4) printed therein.
Fig. 2 schematically represents the photoluminescent device (1) of Fig. 1, with the photoluminescent film (3) arranged on the OLED panel (2), leaving only one of the corners of the photoluminescent film (3) raised, to better discern the constituent elements of the device.
Fig. 3 illustrates an exploded view of a possible alternative embodiment of the invention, in which elements other than the essential ones (which are illustrated in figures 1 and 2) are represented, such as, from bottom to top in the figure, transparent lid (5), back cover (7) arranged between the back lid (5) and a PC-ABS chassis (6), whose chassis (6) receives the photoluminescent device consisting of the OLED screen (2) and the film (3) with the photoluminescent pictogram (4), the assembly being closed at the top by a second transparent lid (5).

### DETAILED DESCRIPTION OF THE INVENTION

The present invention relates to a photoluminescent device and to the production process thereof.

The present invention is based on a combination of a luminous surface based on OLED technology with a photoluminescent film, in order to provide a sign (for example, a safety sign) that displays a safety message with an improved luminance dispersion compared to signs of prior art, namely in relation to signs that use LED technology, with a view to improve the quality of transmission of the safety message to users, even in spaces that do not have surrounding natural and/or artificial lighting, as well as in relation to photoluminescent only signs that rely on natural or artificial LED lighting for energy storage.

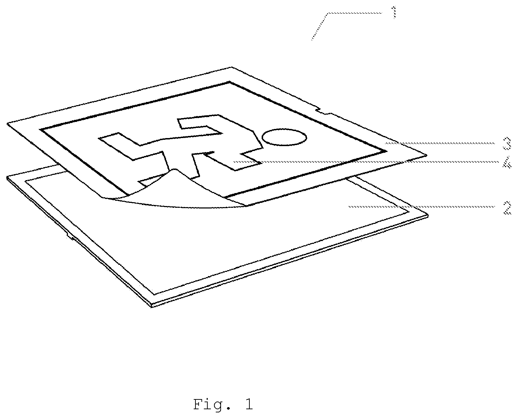

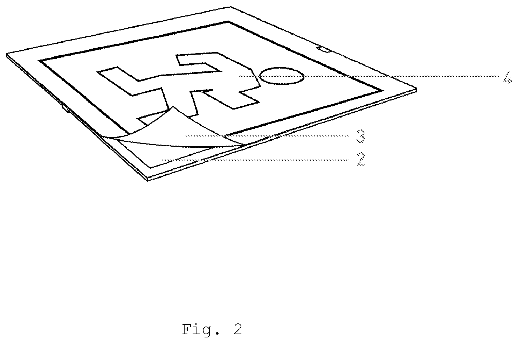

With reference to Fig. 1 and 2, the photoluminescent device (1) of the invention comprises an OLED panel (2) as a primary light source and a photoluminescent film (3) arranged on said OLED panel (2), wherein the photoluminescent film (3) comprises one or more pictograms (4) defining a safety sign, for example, a fire extinguisher or an emergency exit, such pictogram (4) being referred to herein as a safety pictogram. Said safety pictogram (4) consists of photoluminescent mineral pigments that are impregnated into said film (3), normally, but not exclusively, using silk screen printing.

The terms "comprise", "possess", "include", "contain" and their various verbal forms, should be interpreted as comprehensive terms, i. *e*., meaning, for example, "including but not limited to", unless specifically indicate otherwise.

In the context of the present application, the use of the expression "and/or" is intended to mean that both conditions are met or only one of them is met. For example, the expression "pockets and/or compartments" means "pockets and compartments or pockets or compartments".

In the context of the present description, "OLED technology" is understood as a light-emitting technology that is based on organic light-emitting diodes or, according to its original name in English, "Organic Light-Emitting Diode", which gave rise to the acronym OLED. This technology is widely disseminated in the market, competitively with other different technologies (for example, LED, LCD, etc.), constituting the functional technological basis of television screens, tablets and mobile phones or even the screens of signalling, information and advertising devices or others. The technical characterization of OLED technology is well known to those skilled in the art, whereby additional information in this regard is not necessary.

According to the present invention, the expression "OLED panel" or "OLED technology panel" refers to a display or screen that operates based on OLED technology.

In the context of the present description, "photoluminescence" is understood as the property that certain natural materials have to emit light radiation (photons) in the absence of surrounding light, after being subjected to a light source (natural or artificial) of external excitation. Photoluminescent materials, when exposed to external light sources, store energy through a phenomenon of excitation of their atoms (electrons), and subsequently, in a situation of absence of surrounding light, they release all the accumulated energy in the form of visible light, until the atoms (electrons) return to their ground state. In this regard, it is frequently mentioned in the art that said photoluminescent materials are "excited" or, alternatively, "charged", by natural or artificial light sources. There are several minerals available in nature that are photoluminescent, for example aluminates, sulphides (zinc) or sulphur (calcium).

By "photoluminescent pigments" is understood any mineral material available in nature, which presents the property of photoluminescence, which is subjected to industrial treatment that gives it a fine granulated form with dimensions adapted to the required application. Therefore, the minerals referred to in the previous paragraph are combined with other substances with the aim of providing them with the physical and chemical properties desired for each application, resulting in photoluminescent pigments from this process, such as for example: zinc sulphide (ZnS:TR), calcium sulphides (CaS:TR) and the family of alkaline earth aluminates doped with rare earths MAl₂O₄:Eu,RE (M=Ca,Sr,Ba).

In the context of the present description, "photoluminescent sign" is understood a product whose purpose is to transmit, even in situations of total absence of light from a surrounding light source, the message for which it was manufactured, that is to say, to mark alarm, fire-fighting, safety or other equipment. It can also mark escape routes (exits, doors, etc.), dangers, obligations or prohibitions.

According to the present invention, "pictogram" or "safety pictogram" is understood an informative message or drawing defined by printing, on a transparent film of polymeric material, photoluminescent mineral pigments. Due to its constitution, the pictogram can also be referred to as a "photoluminescent pictogram" or "photoluminescent safety pictogram".

In the context of the present invention, "photoluminescent film" is understood to be a transparent film of polymeric material comprising a pictogram of photoluminescent mineral pigments, this pictogram being printed on the film, preferably using silk screen printing.

The printing of the photoluminescent pigments on the film (3) is carried out in order to provide a desired shape or indication for the sign, such as a fire extinguisher, emergency exit indication or others, whereby, through said printing, the photoluminescent pigments define the form and/or content of the safety pictogram (4).

In this way, the signalling provided by the device (1) of the invention is essentially transmitted via the lighting provided by the OLED panel (2) in conjunction with the pictogram (4) printed on the photoluminescent film (3), and in the event of any failure or interruption of the electrical power supply to the OLED panel (2), the absence of light coming from the OLED panel (2) will be compensated by the photoluminescent properties of the pictogram (4) printed on the photoluminescent film (3), which will allow uninterrupted operation of the signalling device (1) until power supply to the (2) OLED panel is restored or until the photoluminescent energy extinguishes.

For this purpose, the film (3) containing the photoluminescent pictogram (4) must be transparent and provide good light passage on both of its faces, anterior and posterior, so that the photoluminescent pigments that define the pictogram (4) printed therein can be excited both by the light coming from the OLED panel (2), which falls directly on the anterior face (the face that is facing, and arranged on, the OLED panel (2) of the film (3), and by possible light, natural or artificial, coming from the external environment, which falls the posterior face of the film (3).

The present invention uses an OLED light source, for example an OLED panel (2) using low electrical energy consumption, which proved to be more homogeneous in the dispersion of its luminance, thus contributing to improving the quality of the visual message transmitted by the photoluminescent sign.

It was surprisingly found that, even in the absence of other surrounding light sources, the OLED panel (2) of the photoluminescent device (1) of the invention is, by itself, capable of sufficiently charging the photoluminescent film (3) that is arranged on it in such a way that it radiates a homogeneous luminance and of adequate dispersion, even in spaces that do not benefit from any lighting external to the device (1) of the invention. In this way, the quality of transmission of the safety message is not affected when it is illuminated, but rather enhanced.

In an even more surprising way, it was found that the backlit photoluminescent device (1) of the invention is capable of providing luminance levels that can be used not only as enhancers of the information sign, in its photoluminescent characteristic, but that additionally allow the fulfilling requirements associated with the concept of safety lighting, enabling, secondarily, the function of illuminating the surrounding space to necessary safety levels to, for example, allow adequate movement on evacuation paths, make existing obstacles that could constitute a danger visible and further illuminate fire-fighting equipment and first intervention means. It should be noted that, conventionally, safety signalling is ensured by means/equipment other than those dedicated to ensuring safety lighting, and there are no known safety signalling devices that satisfactorily combine the safety lighting function.

The use of OLED technology in the backlight panel (2) provides a uniform luminance across the entire surface of the panel (2), translating into a more homogeneous reproduction of the safety message compared to the prior art. This fact has been confirmed not only in illuminated environments, but also in the total absence of surrounding lighting (for example, due to a failure of the power grid or UPS), a situation in which the photoluminescent effect of the sign takes on full function.

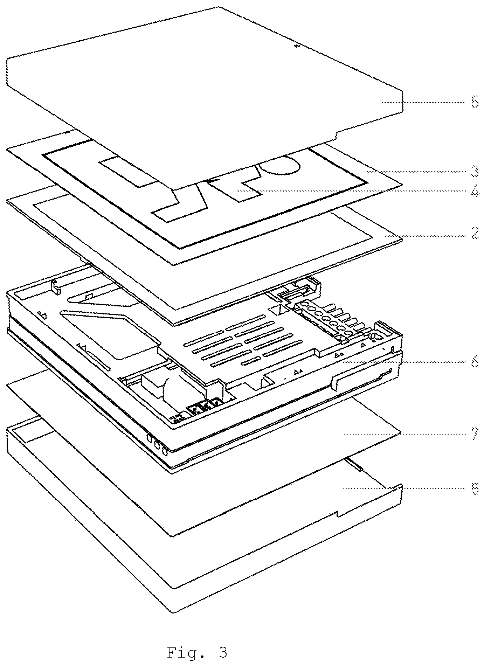

Fig. 3 shows an alternative embodiment of the invention, illustrating in exploded view a device comprising, from bottom to top in the figure, a transparent back lid (5), a back cover (7) arranged between the back lid (5) and a PC-ABS chassis (6), whose chassis (6) receives the photoluminescent device (1) consisting of the OLED screen (2) and the film (3) with the photoluminescent pictogram (4), the assembly being closed at the top by a second transparent lid (5). This specific embodiment of the invention aims to be used in spaces with high humidity conditions and large temperature differences, without prejudice, naturally, to being able to be used in less adverse environmental conditions.

Without intending to theorize, it is believed that the aforementioned improvement in homogeneity in the reproduction of the message by the device (1) of the invention, compared to prior art devices, is due, among other reasons, to the photoluminescent pigments of the film (3) being stimulated by the OLED backlighting in a much more uniform way than in prior art cases that use LED or other technology.

However, despite the device (1) presenting improved (more homogeneous) luminance profiles compared to those known from the prior art, it was considered that the definition and clarity of the displayed sign still needed improvement.

In fact, placing a photoluminescent film, like all those normally available on the market, on an OLED panel (2), did not provide the expected balance with regard to the definition of the pictogram (4), namely in relation to colour, which turned out to be very translucent, to the homogeneity of its coloured area and photoluminescent performance, in particular with regard to the level of stimulation of the photoluminescent material printed on the film (3), which conditions the luminance thereof when the device (1) has to resort only to the photoluminescent function, in the absence of any external light source and the backlighting provided by the OLED panel (2).

It should be noted that the definitions associated with the colour of the pictogram are very relevant in the area of safety signalling, as colours are intrinsically associated with the type of information that the device intends to convey. For example, red colour, which must be within a certain colour region, is associated with fire equipment signalling; the green colour, also within the limits of a colour region, is used in signs that indicate an evacuation path, the location of safety equipment or a safety installation, or even a safety action.

Safety signalling complies with international and national rules for pictograms representing indications for equipment or actions in times of emergency.

Safety lighting uses indicative pictograms in its function to guide people on an evacuation route in the event of an emergency and/or prevent panic states by illuminating spaces in buildings normally occupied by human presence, as well as means of combat and alarm to fires that are necessary to use. Luminance values associated with safety lighting are typically higher than those required by safety signalling.

Therefore, with a view to improving the device (1) of the invention in order to obtain optimal luminance profiles for safety signalling, it was necessary to implement an R&D program in order to seek the best possible design of a photoluminescent film (3) for actuation by backlighting from a panel (1) of OLED technology, namely with regard to the materials used and their production process.

Such a photoluminescent device (1), optimized to present optimal luminance profiles, provides undeniable benefits to its users, whom, in the event of an emergency and/or absence of lighting, will have clearer safety messages at their disposal, allowing better identification of the message and resulting in faster and more precise actions, such as, for example, taking a certain direction to reach a safe location in case of emergency or to exit the facilities or activate the alarm or use firefighting means.

Therefore, it was concluded that the photoluminescent film (3) plays a relevant role in said production of better profiles or, in other words, better luminance characteristics.

The photoluminescent film (3) consists of a support film or substrate on which at least one pictogram (4) of photoluminescent mineral pigments is printed.

The photoluminescent film (3) must have a print of the safety colour and also a layer of photoluminescent material, in such a way that it allows the passage of light coming from the illuminated surface (OLED panel) in homogeneous conditions, whose uniformity displayed must be observable in the presence of surrounding light and in the absence of surrounding light, providing good conditions for transmission (clarity) of the safety message, namely with regard to image definition and stimulation of the photoluminescent properties of the printed photoluminescent material.

Typically, said support film or substrate is a polymeric film, preferably polycarbonate, comprising a light transmission above 80%. Usually, light transmission values above 85% contribute to the best results.

The polymeric film also comprises a thickness of the order of 0.250 mm, although this value can vary considerably. Preferably, thicknesses in the range of 0.200 mm to 0.300 mm, most preferably 0.237 to 0.263 mm, should be used. It should be noted that other thicknesses outside the mentioned ranges can be used, however, in these cases, problems may occur that prevent good stimulation of the photoluminescent layer, as the film itself will serve as a barrier to the passage of energy. On the other hand, thinner thicknesses present difficulties in the silk screen printing production process due to their high sensitivity to vacuum and capacity for deformation during handling.

With regard to the photoluminescent material to be used in the safety sign, it is printed on said support film or substrate as a photoluminescent mixture. It was found that some characteristics of this photoluminescent mixture positively influence the luminance profiles produced by the device (1) of the invention.

However, when producing the photoluminescent films (3) for the device (1) of the invention, it was found that some formulations of said mixture of photoluminescent material presented adhesion difficulties on polymeric support films, namely polycarbonate films.

To overcome said adhesion constraints, it was necessary to develop formulations of photoluminescent mixtures suitable for their deposition on the polymeric support film (substrate), particularly on polycarbonate films, as both the type of constituents of the mixture and proportion thereof affect the conditions of good adhesion to said substrate. Furthermore, the formulations still had to guarantee optimal luminance profiles, as mentioned previously.

Therefore, according to the present invention, the suitable photoluminescent mixture comprises a photoluminescent pigment and a binder, the weight ratio of which is preferably 65% to 75% of pigment to 25% to 35% of binder, more preferably 67% to 70% of pigment to 30% to 33% of binder, most preferably 70% of pigment to 30% of binder.

Various photoluminescent pigments can be used within the scope of the present invention, such as zinc sulphide (ZnS:TR), calcium sulphides (CaS:TR) and selected from the family of alkaline earth aluminates doped with rare earths MAl₂O₄: Eu,RE (M=Ca,Sr,Ba).

Preferably the pigments are selected from the group of Alkaline Earth Aluminates of the type MAl₂O₄: Eu,RE; where:
- M = Ca (Calcium), Sr (Strontium), Ba (Barium) - alkaline earth elements and
- RE = Nd (Neodymium), Dy (Dysprosium) - lanthanide elements, belonging to the rare earth group.

Most preferably, the photoluminescent pigment to be used in the compositions mentioned above for the photoluminescent mixture is Strontium Aluminate doped with Europium and Dysprosium (SrAl₂O₄:Eu²⁺,Dy³⁺).

Said photoluminescent mixture binder of the invention comprises a dilution agent, a varnish and an additive.

Said dilution agent is selected from the group comprising water, mineral oils, aromatic and aliphatic Hydrocarbons, acetones, esters, alcohols and combinations thereof. Preferably, the dilution agent is an ester; more preferably it is an acrylate ester monomer.

Said varnish is selected from the group comprising acrylic resins, polyvinyl acetate, polyvinyl alcohol, polyamide resins, polyurethane resins and epoxy resin and combinations thereof. Preferably, the varnish is a polyamide resin.

Said additive is selected from the group comprising dryers, hardeners, photoinitiators and curing promoters and combinations thereof. Preferably, the additive is a photoinitiator.

In a preferred embodiment, the binder comprises, in proportion:
- a dilution agent in the range of 11% to 12% by weight,
- an additive in the range of 6% to 12% by weight, and
- a varnish in the range of 77% to 82% by weight.

Preferably, the binder comprises, in proportion:
- a dilution agent in the range of 11% to 12% by weight,
- an additive in the range of 6% to 9% by weight, and
- a varnish in the range of 80% to 82% by weight.

Most preferably, the binder comprises, in proportion:
- a dilution agent in the range of 11% to 11.5% by weight,
- an additive in the range of 8.5% to 11% by weight, and
- a varnish in the range of 78% to 80% by weight.

In another embodiment, the photoluminescent film (3) additionally comprises flame retardant characteristics.

The present invention also relates to the production process of the photoluminescent device (1) of the invention and, in particular, to the production process of the photoluminescent film (3) thereof.

The production process of the photoluminescent device (1) of the invention comprises the steps of:
a) preparing a photoluminescent mixture comprising a photoluminescent pigment and a binder, in the proportions of 65% to 75% by weight of photoluminescent pigment to 25% to 35% by weight of binder;
b) printing on a polymeric support film at least one safety pictogram (4) with the photoluminescent mixture from step a); and
c) arrange the photoluminescent film (3) obtained in step b) on an OLED panel (2).

In a preferred embodiment, the binder of said mixture comprises a dilution agent, an additive and a varnish in proportions mentioned above in the present description.

Also preferred photoluminescent pigments for use in the mixture have been described above.

To provide photoluminescent properties to a polymeric film, silk screen printing, digital printing or flexography processes can be used. Among these, the silk screen printing process is preferred, although any printing process within the reach of the person skilled in the art can be applied.

A conventional silk screen printing process comprises passing a photoluminescent mixture, through a serigraphic screen, onto a support film. The mesh opening of said serigraphic screen determines the thickness of the deposit of the photoluminescent layer on the support film and, consequently, indirectly influences the luminance performance of the photoluminescent film thus obtained.

To produce the photoluminescent film (3) of the present invention, it was found that the use of a serigraphic screen of the type 27 threads per cm and 140 µm nominal diameter of the screen thread T27:140, with a mesh opening in the range of 190 to 240 µm, preferably 190 µm, more preferably 218 µm, for deposition of a theoretical photoluminescent mixture of 88.3 cm cm³/m² (as defined above) on a polymeric support film or substrate, as for example a polycarbonate film, made it possible to obtain the best photoluminescent films (3) from the device (1) of the invention, both in terms of the conditions of adhesion of the photoluminescent mixture to the substrate, and in the quality of the luminance profiles produced by the device (1) of the invention.

It should be noted, however, that other serigraphic screens, commonly used in the state of the art, were used, with results perfectly in line and within the scope of the improvements obtained by the backlit photoluminescent device (1) of the present invention.

In summary, it was verified beyond doubt that the choice of the best formulations (mentioned above) of photoluminescent mixture had a very relevant impact on the quality of the luminance profiles of the device (1) of the invention and at the same time allowed overcoming the problems inherent to the production of the photoluminescent films (3) of the invention, thus providing, through a careful selection of the serigraphic screen in the production phase, excellent adhesion to the polycarbonate substrate in conditions of equally remarkable uniformity of deposition (or, in other words, printing).

Such conditions contributed, as already mentioned, to obtain optimal luminance profiles when the resulting photoluminescent film (3) is backlit by a panel (2) of OLED technology. In this way, the device (1) of the present invention is able to display its safety pictograms (4) with a clear definition of their shapes and colours, both in the situation of full and normal operation of the OLED panel (2), and in cases of total absence of light sources (surrounding and even from its (2) OLED panel), which only displays photoluminescent luminance.

The improved display of the safety pictogram (4), for a longer period of time, is really decisive in certain circumstances, as, for example, in the presence of smoke, dust or interruption of usual lighting and in faster and more accurate identification of the safety message by the users, consequently promoting more expeditious and appropriate responses regarding the actions to be taken, as, for example, reaching for fire-fighting equipment, an alarm button or heading to the exit.

The device (1) of the present invention presents undeniable improvements compared to the prior art, both in terms of luminance homogeneity and in terms of the clarity provided by the sign. It was accessorily verified that the luminance levels obtained can meet regulatory requirements required in the area of safety lighting, which allows the simultaneous use of the device of the invention for safety signalling and safety lighting.

All results and conclusions relating to the present invention were based on tests carried out, which confirmed the best conditions for stimulating the photoluminescent technology of the device of the invention.

### EXAMPLES

To evaluate the performance of the photoluminescent film (3) in terms of luminance, 5 tests were carried out, which are described in Tables 1 and 2 below, which allowed the results of the performance of said photoluminescent film (3) to be measured, based on acceptance criteria. The acceptance criteria refer to the homogeneity of luminance and clarity provided by the photoluminescent device (1) of the present invention.

**Table 1: Results of tests carried out for 63%, 65%, 70%, 75% and 77% by weight of photoluminescent pigment (zinc sulphide, calcium sulphide and strontium aluminate doped with europium and dysprosium), where the % of binder is 37%, 35%, 30%, 25% and 23% by weight, respectively. (-) represents unsatisfactory homogeneity of luminance and clarity; (+) represents satisfactory homogeneity of luminance and clarity; (++) represents very satisfactory homogeneity of luminance and clarity; (+++) represents extremely satisfactory homogeneity of luminance and clarity.**

| Assay # (% of pigment/% of binder) | | Photoluminescent Pigment | | |
|---|---|---|---|---|
| | | Zinc sulphide (ZnS:TR) | Calcium sulphide (CaS: TR) | Strontium Aluminate doped with Europium and Dysprosium |
| 1 | (63%/37%) | - | - | - |
| 2 | (65%/35%) | + | + | ++ |
| 3 | (70%/30%) | ++ | ++ | +++ |
| 4 | (75%/25%) | + | + | ++ |
| 5 | (77%/23%) | - | - | - |

Strontium aluminate doped with europium and dysprosium with % of pigment/% of binder of 70%/30% was the photoluminescent pigment where the best results were obtained, in terms of homogeneity of luminance and clarity. It was also found that in all tested pigments the percentages of 70%/30% of pigment/binder were those that allowed a better homogeneity of luminance and clarity provided by the photoluminescent device (1) of the present invention.

In the assays mentioned above in Table 1, the proportions of dilution agent, additive and varnish used in the binder were as described below, in Table 2.

**Table 2: Proportions of the dilution agent, additive and varnish used in the binder of assays 1 to 5.**

| Essay # | Dilution agent_ | Additive | Varnish |
|---|---|---|---|
| 1 | 13% | 13% | 83% |
| 2 | 12% | 11% | 80% |
| 3 | 11.5% | 9% | 79% |
| 4 | 11% | 8.5% | 78% |
| 5 | 10% | 5% | 76% |

Several assays were also carried out using different substrates, all with a light transmission above 80%, verifying that none of them significantly altered the results.

With the results obtained in these assays, it was found that the quantities of photoluminescent pigment and binder that allow a more homogeneous luminance dispersion, thus contributing to improving the quality of the visual message transmitted by the photoluminescent sign, are the quantities of assays 2, 3 and 4, in particular, of assay 3, that is to say, 70% by weight of photoluminescent pigment and 30% by weight of binder.

It is to be noted that although the present invention has been described with reference to its preferred embodiments, many modifications and alternatives can be made by one skilled in the art without departing from the scope of the invention, which is defined by the claims.

## Claims

1. Photoluminescent device (1) for safety signalling, **characterized in that** it comprises an OLED panel (2) and a photoluminescent film (3) arranged on said OLED panel (2), wherein
the photoluminescent film (3) comprises:
• a transparent support film and
• at least one photoluminescent safety pictogram (4) printed on the transparent support film, wherein
• the safety pictogram (4) consists of a photoluminescent mixture comprising a photoluminescent pigment and a binder, in the proportions of 65% to 75% by weight of photoluminescent pigment to 25% to 35% by weight of binder.

2. Photoluminescent device (1) according to claim 1, **characterized in that** said photoluminescent mixture comprises 67% to 70% by weight of pigment to 30% to 33% by weight of binder.

3. Photoluminescent device (1) according to claim 1, **characterized in that** said photoluminescent mixture comprises 70% by weight of pigment to 30% by weight of binder.

4. Photoluminescent device (1) according to any one of claims 1 to 3, **characterized in that** said binder comprises a dilution agent, an additive and a varnish.

5. Photoluminescent device (1) according to claim 4, **characterized in that** the binder comprises a proportion of 11% to 12% by weight of dilution agent, 6% to 12% by weight of additive and 77% to 82% by weight of varnish.

6. Photoluminescent device (1) according to claim 4, **characterized in that** the binder comprises a proportion of 11% to 12% by weight of dilution agent, 6% to 9% by weight of additive and 80% to 82% by weight of varnish.

7. Photoluminescent device (1) according to claim 4, **characterized in that** the binder comprises a proportion of 11% to 11.5% by weight of dilution agent, 8.5% to 11% by weight of additive and 78% to 80 % by weight of varnish.

8. Photoluminescent device (1) according to any one of the previous claims, **characterized in that** the photoluminescent pigment is selected from the group of Alkaline Earth Aluminates of the type MAl₂O₄: Eu,RE, where M = Ca, Sr, Ba and RE = Nd, Dy.

9. Photoluminescent device (1) according to any one of the previous claims, **characterized in that** the photoluminescent pigment is Strontium Aluminate doped with Europium and Dysprosium.

10. Photoluminescent device (1) according to claim 1, **characterized in that** said support film is made of a polymeric material, preferably polycarbonate.

11. Process for producing a photoluminescent device (1) as claimed in claims 1 to 10, **characterized in that** it comprises the steps of:
a) preparing a photoluminescent mixture comprising a photoluminescent pigment and a binder, in the proportions of 65% to 75% by weight of photoluminescent pigment to 25% to 35% by weight of binder;
b) printing on a polymeric support film at least one safety pictogram (4) with the photoluminescent mixture from step a); and
c) arrange the photoluminescent film (3) obtained in step b) on an OLED panel (2).

12. Process for producing a photoluminescent device (1), according to claim 11, **characterized in that**, in step a) of preparing photoluminescent mixture, the binder of said mixture comprises a dilution agent, an additive and a varnish in a proportion of 11% to 12% by weight of dilution agent, 6% to 12% by weight of additive and 77% to 82% by weight of varnish; preferably in a proportion of 11% to 12% by weight of dilution agent, 6% to 9% by weight of additive and 80% to 82% by weight of varnish; most preferably in a proportion of 11% to 11.5% by weight of dilution agent, 8.5% to 11% by weight of additive and 78% to 80% by weight of varnish.

13. Process for producing a photoluminescent device (1), according to any one of claims 11 and 12, **characterized in that**, in step a) of preparing the photoluminescent mixture, the photoluminescent pigment is selected from the group of Alkaline Earth Aluminates of the type MAl₂O₄: Eu, RE, where M = Ca, Sr, Ba and RE = Nd, Dy.

14. Process for producing a photoluminescent device (1), according to any one of claims 11 and 12, **characterized in that**, in step a) of preparing photoluminescent mixture, the photoluminescent pigment is Strontium Aluminate doped with Europium and Dysprosium.

15. Use of the photoluminescent device (1) of any one of claims 1 to 10, **characterized in that** safety signalling and safety lighting are applied simultaneously.
